# EUROPEAN PATENT APPLICATION

(11) **EP 4 231 393 A1**
(43) Date of publication of application: **23.08.2023**
(21) Application number: 21882834.1
(22) Date of filing: 19.10.2021
(51) Int. Cl.: H01M 4/86, H01M 4/96, C01B 32/05, H01M 8/10, B01J 23/42

(54) **CARBON MATERIAL FOR POLYMER ELECTROLYTE FUEL CELL CATALYST CARRIERS, CATALYST LAYER FOR POLYMER ELECTROLYTE FUEL CELLS, AND FUEL CELL**

(30) Priority: 19.10.2020 JP 2020175410
(71) Applicant: NIPPON STEEL Chemical & Material Co., Ltd., Tokyo 103-0027 (JP)
(72) Inventor: MASAKI, Kazuyoshi, Tokyo 103-0027 (JP); TADA, Wakana, Tokyo 103-0027 (JP); SHIMIZU, Takehiro, Tokyo 103-0027 (JP); TADOKORO, Kenichiro, Tokyo 103-0027 (JP); IIJIMA, Takashi, Tokyo 100-8071 (JP); HIYOSHI, Masataka, Tokyo 100-8071 (JP); FURUKAWA, Shinya, Tokyo 100-8071 (JP); KOMURA, Tomoko, Tokyo 100-8071 (JP)
(74) Representative: SONN Patentanwälte OG
(86) International application number: PCT/JP2021/038651
(87) International publication number: WO 2022/085693

(57) **Abstract**

A carbon material for a catalyst carrier of a polymer electrolyte fuel cell, in which a nitrogen adsorption/desorption isotherm exhibits two hysteresis loops having a first hysteresis loop and a second hysteresis loop in a range where a relative pressure P/P₀ is 0.4 or more.

## Description

### Technical Field

The present disclosure relates to a carbon material for a catalyst carrier of a polymer electrolyte fuel cell, a catalyst layer for a polymer electrolyte fuel cell, and a fuel cell.

### Background Art

A polymer electrolyte fuel cell, which is one type of fuel cells, includes a pair of catalyst layers disposed on both surfaces of a solid polymer electrolyte membrane, gas diffusion layers disposed on the outside of the respective catalyst layers, and separators disposed on the outside of the respective gas diffusion layers. One of the pair of catalyst layers serves as an anode of the polymer electrolyte fuel cell, and the other catalyst layer serves as a cathode of the polymer electrolyte fuel cell. In a normal polymer electrolyte fuel cell, a plurality of unit cells having the above constituent elements are stacked in order to obtain a desired output.

A reducing gas such as hydrogen is introduced into the separator on the anode side. The gas diffusion layer on the anode side diffuses the reducing gas and then introduces the gas into the anode. The anode includes a catalyst component, a catalyst carrier supporting the catalyst component, and an electrolyte material having proton conductivity. The catalyst carrier is often configured using a carbon material. On the catalyst component, an oxidation reaction of the reducing gas occurs, and protons and electrons are generated. For example, when the reducing gas is hydrogen gas, the following oxidation reaction occurs.

H₂ → 2H⁺ + 2e⁻ (E₀ = 0 V)

The protons generated by this oxidation reaction are introduced into the cathode through the electrolyte material in the anode and the solid polymer electrolyte membrane. The electrons are introduced into an external circuit through the catalyst carrier, the gas diffusion layer, and the separator. The electrons are introduced into the separator on the cathode side after performing work (power generation) in the external circuit. Then, the electrons are introduced into the cathode through the separator on the cathode side and the gas diffusion layer on the cathode side.

The solid polymer electrolyte membrane is configured using an electrolyte material having proton conductivity. The solid polymer electrolyte membrane introduces the protons generated by the oxidation reaction into the cathode.

An oxidizing gas such as oxygen gas or air is introduced into the separator on the cathode side. The gas diffusion layer on the cathode side diffuses the oxidizing gas and then introduces the gas into the cathode. The cathode includes a catalyst component, a catalyst carrier supporting the catalyst component, and an electrolyte material having proton conductivity. The catalyst carrier is often configured using a carbon material. On the catalyst component, a reduction reaction of the oxidizing gas occurs, and water is generated. For example, when the oxidizing gas is oxygen gas or air, the following reduction reaction occurs.

O₂ + 4H⁺ + 4e⁻ → 2H₂O (E₀ = 1.23 V)

The water generated by the reduction reaction is discharged to the outside of the fuel cell together with the unreacted oxidizing gas. As described above, in the polymer electrolyte fuel cell, power is generated using an energy difference (potential difference) between the oxidation reaction and the reduction reaction. In other words, electrons generated by the oxidation reaction perform work in the external circuit.

Meanwhile, in recent years, as disclosed in Patent Literatures 1 to 5, a technique using a porous carbon material as a catalyst carrier has been proposed. As disclosed in Patent Literatures 1 to 4, among porous carbon materials, a porous carbon material having a dendritic carbon nanostructure of a three-dimensional dendritic structure (hereinafter, also referred to as a dendritic carbon nanostructure) has a characteristic structure that is not recognized in other carbon materials. Specifically, the dendritic carbon nanostructure has a structure in which a highly developed pore structure (porous structure) and a large scale dendritic structure are compatible. That is, by using the dendritic carbon nanostructure as a catalyst carrier, the catalyst layer has a large number of pores capable of supporting a catalyst component inside the catalyst carrier. Therefore, the catalyst layer can increase the carrying concentration of the catalyst. Gas diffusion in pores is also excellent, and gas diffusion in the catalyst layer is excellent. As a result, the dendritic carbon nanostructure has a characteristic of being excellent in large current power generation as compared with conventional carbon black-based porous carbon materials such as Ketjen black.

Patent Literature 5 proposes a technique in which a porous carbon (MgO template carbon) material using magnesium oxide nanoparticles as a template is used as a raw material, and porous carbon heat-treated in the air is used as a catalyst carrier. The MgO template carbon generally has a feature of having uniform pores even inside the material. The MgO template carbon oxidizes and consumes the carbon walls forming the pores by heating in the air, thereby reducing the partition between the pores. That is, the MgO template carbon has been proposed as a material intended to enhance intercommunicability.
Patent Literature 1: WO 2014/129597 A1
Patent Literature 2: WO 2015/088025 A1
Patent Literature 3: WO 2015/141810 A1
Patent Literature 4: WO 2016/133132 A1
Patent Literature 5: Japanese Patent Application Laid-Open (JP-A) No. 2015-164889

### SUMMARY OF INVENTION

### Technical Problem

When a large current flows in the polymer electrolyte fuel cell, the overvoltage tends to increase. For this reason, for example, in a fuel cell vehicle using a fuel cell as a power source, since the maximum output is emphasized, there is a great demand for reducing the overvoltage at the time of a large current. In order to further spread the polymer electrolyte fuel cell, it is required to lower the overvoltage at the time of a large current more than before.

Therefore, an object of the present disclosure is to provide novel and improved carbon material for a catalyst carrier of a polymer electrolyte fuel cell, catalyst layer for a polymer electrolyte fuel cell, and fuel cell, which can further reduce the overvoltage at the time of a large current.

### Solution to Problem

A carbon material for a catalyst carrier of a polymer electrolyte fuel cell, a catalyst layer for a polymer electrolyte fuel cell, and a fuel cell of the present disclosure include the following aspects.
<1> A carbon material for a catalyst carrier of a polymer electrolyte fuel cell, in which a nitrogen adsorption/desorption isotherm exhibits two hysteresis loops including a first hysteresis loop and a second hysteresis loop in a range in which a relative pressure P/P₀ is 0.4 or more.
<2> The carbon material for a catalyst carrier of a polymer electrolyte fuel cell described in <1>, in which the two hysteresis loops exhibited by the nitrogen adsorption/desorption isotherm include a first hysteresis loop within a range in which the relative pressure P/P₀ is 0.87 or more and a second hysteresis loop within a range in which the relative pressure P/P₀ is from 0.4 to 0.87.
<3> The carbon material for a catalyst carrier of a polymer electrolyte fuel cell described in <2>, in which the carbon material satisfies the following requirements (A), (B), and (C):
   (A) a specific surface area determined by BET analysis of a nitrogen adsorption isotherm is from 450 m²/g to 1500 m²/g,
   (B) in the first hysteresis loop, a minimum value ΔV_{0.87min} of an adsorption amount difference ΔV_{0.87} is 20 mL/g or less within a range in which the relative pressure P/P₀ is 0.87 ± 0.03, and
   (C) an area ΔS_{0.4-0.87} of the second hysteresis loop is from 5 mL/g to 50 mL/g.
<4> The carbon material for a catalyst carrier of a polymer electrolyte fuel cell described in <3>, in which the carbon material further satisfies the following requirement (D):
   (D) in the nitrogen adsorption isotherm, an adsorption amount difference ΔV_{0.95-0.99} between an adsorption amount at a relative pressure P/P₀ of 0.99 and an adsorption amount at a relative pressure P/P₀ of 0.95 is from 500 mL/g to 1100 mL/g.
<5> The carbon material for a catalyst carrier of a polymer electrolyte fuel cell described in <3> or <4>, in which the carbon material further satisfies the following requirement (E):
   (E) in a Raman spectrum obtained by Raman spectrometry, a half-value width of a G-band detected in a range of 1500 cm⁻¹ to 1700 cm⁻¹ is from 45 cm⁻¹ to 70 cm⁻¹.
<6> A catalyst layer for a polymer electrolyte fuel cell, the catalyst layer including the carbon material for a catalyst carrier of a polymer electrolyte fuel cell described in any one of <1> to <5>.
<7> A fuel cell including the catalyst layer for a polymer electrolyte fuel cell described in <6>.
<8> The fuel cell described in <7>, in which the catalyst layer for a polymer electrolyte fuel cell is a catalyst layer on a cathode side.

### Advantageous Effects of Invention

According to the present disclosure, there are provided novel and improved carbon material for a catalyst carrier of a polymer electrolyte fuel cell, catalyst layer for a polymer electrolyte fuel cell, and fuel cell, which can further reduce the overvoltage at the time of a large current.

### BRIEF DESCRIPTION OF DRAWINGS

Fig. 1 is a graph schematically showing an example of a nitrogen adsorption/desorption isotherm in a carbon material for a catalyst carrier of a polymer electrolyte fuel cell of the present disclosure.
Fig. 2 is an explanatory diagram schematically illustrating an example of a bottleneck type pore.
Fig. 3 is a schematic diagram illustrating an example of a schematic configuration of a fuel cell according to the present disclosure.
Fig. 4 is a photograph showing a measurement method for measuring a branch diameter when the carbon material for a catalyst carrier of the present disclosure is observed with an SEM.
Fig. 5 is a diagram for explaining a method of measuring a branch diameter of a carbon material for a catalyst carrier of the present disclosure.

### DESCRIPTION OF EMBODIMENTS

In the present disclosure, a numerical range that has been indicated by use of "to" indicates the range that includes the numerical values which are described before and after "to", as a lower limit value and an upper limit value, respectively. A numerical range when "more than" or "less than" is attached to the numerical values which are described before and after "to" means a range not including these numerical values as the lower limit value or the upper limit value.

In the present disclosure, the term "step" includes not only an independent step but also a step by which an intended action of the step is achieved, though the step cannot be clearly distinguished from other steps.

### <1. Carbon Material for Catalyst Carrier of Polymer Electrolyte Fuel Cell>

In a carbon material for a catalyst carrier of a polymer electrolyte fuel cell of the present disclosure (hereinafter, also referred to as "carbon material for a catalyst carrier"), a nitrogen adsorption/desorption isotherm of the carbon material exhibits two hysteresis loops including a first hysteresis loop and a second hysteresis loop in a range in which a relative pressure P/P₀ is 0.4 or more. The carbon material for a catalyst carrier of the present disclosure can further reduce the overvoltage at the time of a large current.

A dominant factor that affects the overvoltage at the time of a large current is considered to be the migration resistance (diffusion resistance) of a substance involved in the reaction on the cathode side. The substances involved in the reaction on the cathode side are electrons, protons, oxygen, and water (water vapor) generated by the reaction on the cathode side. Among these substances, electrons and protons are considered to exhibit an ohmic behavior. That is, the resistance value thereof is constant without being affected by the magnitude of the current. Therefore, it is considered that the dominant factor of the overvoltage at the time of a large current is not electrons and protons but oxygen and water vapor. That is, it is considered that the diffusion resistance (so-called gas diffusion resistance) of the gas flowing in the cathode is a dominant factor of the overvoltage at the time of a large current.

Conventionally, carbon materials have been evaluated based on a nitrogen adsorption isotherm. However, the characteristics of the carbon material at the time of a large current cannot be sufficiently evaluated only by the nitrogen adsorption isotherm. For example, Ketjen black is also widely used as a catalyst carrier for a polymer electrolyte fuel cell. Ketjen black has a dendritic structure similarly to the dendritic carbon nanostructure, and the inside of the branch is also porous. However, the branch diameter of the branch forming the dendritic structure is thin, and the pore diameter of the inter-branch pore is small. For this reason, Ketjen black does not exhibit good gas diffusivity like the dendritic carbon nanostructure. Therefore, the total pore volume can be increased by activating Ketjen black. When Ketjen black subjected to an activation treatment is used as a catalyst carrier, gas diffusion resistance tends to be reduced and the overvoltage at the time of a large current tends to be reduced as compared with Ketjen black before the activation treatment. However, it is not sufficient to reduce the overvoltage at the time of a large current. However, the characteristics of the carbon material, particularly, characteristics of the carbon material at the time of a large current could not be sufficiently evaluated only by the nitrogen adsorption isotherm focusing only on an adsorption process.

In this regard, the present inventors have focused on the nitrogen adsorption isotherm and the nitrogen desorption isotherm of the carbon material for a catalyst carrier in order to evaluate the diffusion resistance of the gas flowing in the cathode. The nitrogen adsorption isotherm and the nitrogen desorption isotherm are obtained by nitrogen gas adsorption measurement. The nitrogen adsorption isotherm is an isotherm on the nitrogen adsorption side, and the nitrogen desorption isotherm is an isotherm on the nitrogen desorption side. Hereinafter, the isotherm obtained by collecting the nitrogen adsorption isotherm and the nitrogen desorption isotherm (that is, the isotherm obtained by connecting these isotherms) is also referred to as a nitrogen adsorption/desorption isotherm.

For example, in a carrier of a carbon black raw material made porous by an activation treatment, which has been used conventionally used, pores due to gaps between carbon black raw materials are formed in a catalyst layer. The pores formed in the catalyst layer reflect the primary particle diameter of carbon black. This pore diameter is typically 30 nm to 40 nm (diameter). For example, Ketjen black after the activation treatment has a tendency that the area of the hysteresis loop described above increases. That is, the volume ratio of a bottleneck type pore described below increases. When the nitrogen adsorption/desorption isotherm in the catalyst layer using such a carbon black raw material made porous by the activation treatment as a carrier was measured, the nitrogen adsorption/desorption isotherm exhibited one hysteresis loop.

The porous carbon material disclosed in Patent Literature 5 has a particulate shape. Even when the gas flowability in the particles is improved, the catalyst layer formed of the particulate matter has a small pore volume, and it is difficult to control the pore size. As a result, not gas diffusion in the particles but gas diffusion in the catalyst layer becomes a constraint, and the required level of large current characteristics is not achieved. Therefore, when the nitrogen adsorption/desorption isotherm in a catalyst layer using MgO template carbon as a carrier was measured, the nitrogen adsorption/desorption isotherm exhibited one hysteresis loop.

For the carbon material for a catalyst carrier exhibiting the hysteresis loop as described above, the present inventors have considered the relationship between the ideal image and the hysteresis for the catalyst carrier. In order to reduce the overvoltage at the time of a large current, the mass transfer resistance at the time of a large current may be reduced. For example, in the case of the dendritic carbon nanostructure, the branch diameter is about 50 nm to 100 nm, and the branch length is about 50 nm to 200 nm. Therefore, the pores of the catalyst layer are on the order of about 100 nm (width), and the gas diffusivity in the catalyst layer is overwhelmingly higher than that of the carrier of the carbon black raw material. From such a viewpoint, it is understood that when the dendritic carbon nanostructure is used as a catalyst carrier on the cathode side, the gas diffusion resistance becomes smaller than that of the catalyst carrier of the carbon black raw material based on the three-dimensional form of the dendritic carbon nanostructure.

Focusing on the dendritic carbon nanostructure, there are two types of mass transfer: mass transfer in pores existing inside the branches themselves (hereinafter, also referred to as "intra-branch pores") and mass transfer in pores formed in gaps between the branches (hereinafter, also referred to as "inter-branch pores"). For example, when the gas diffusion to the surface of the carrier is not sufficient, the large current characteristics cannot be enhanced even if the diffusion of the substance in the intra-branch pores is high. That is, it is considered that priority is given to reducing the resistance to gas diffusion and increasing the gas supply to the surface of the carrier in the catalyst layer. The pores formed in the catalyst layer are considered to be mainly pores between branches of the carrier. Therefore, it is important to increase the pore diameter of the inter-branch pores and increase the pore volume, and to have a sharp distribution width.

In the dendritic carbon nanostructure, when the pore diameter and the pore volume in the inter-branch pores are increased, the nitrogen adsorption/desorption isotherm is considered to exhibit a hysteresis loop even in a region where the relative pressure is high. When the dendritic carbon nanostructure can exhibit such a hysteresis loop, the mass transfer resistance at the time of a large current can be reduced, and the overvoltage at the time of a large current is predicted to decrease. The nitrogen adsorption/desorption isotherm of the dendritic carbon nanostructure exhibits a hysteresis loop due to the intra-branch pores. That is, in the dendritic carbon nanostructure of the present disclosure, since the nitrogen adsorption/desorption isotherm exhibits two hysteresis loops in a range in which the relative pressure P/P₀ is 0.4 or more, it is considered that the mass transfer resistance at the time of a large current can be reduced, and the overvoltage at the time of a large current is reduced. In a conventional catalyst layer such as a catalyst layer using a carbon black raw material as a carrier or a catalyst layer using MgO template carbon as a carrier, such a hysteresis loop is not exhibited, and thus it is considered that a decrease in overvoltage at the time of a large current is not sufficient.

In the above, the description has been made by taking the dendritic carbon nanostructure as an example, but as long as the carbon material for a catalyst carrier exhibits two hysteresis loops in a range in which the relative pressure P/P₀ is 0.4 or more, it is considered that the overvoltage at the time of a large current can be reduced without being limited to the dendritic carbon nanostructure.

As described above, in the carbon material for a catalyst carrier of the present disclosure, the nitrogen adsorption/desorption isotherm exhibits two hysteresis loops in a range in which the relative pressure P/P₀ is 0.4 or more. The carbon material for a catalyst carrier is not particularly limited. From the viewpoint of easily reducing the overvoltage at the time of a large current, the carbon material for a catalyst carrier is preferably a dendritic carbon nanostructure. Hereinafter, a dendritic carbon nanostructure which is a preferred aspect will be described.

In the present disclosure, the dendritic carbon nanostructure has a structure in which a highly developed pore structure and a large scale dendritic structure are compatible. That is, the dendritic carbon nanostructure has a dendritic structure formed by branches made of porous carbon. The branches constituting the dendritic structure are diversely branched. Each branch is long and thick (for example, the branch diameter is about 50 nm to 100 nm (width) and the branch length is about 50 nm to 200 nm). The variation in branch diameter is relatively small. In other words, the distribution width of the branch diameters is sharp. The dendritic carbon nanostructure has a structure in which thick and long waistless branches are diversely branched. In the inter-branch pores, thick and long waistless pores corresponding to the branch diameter and the branch length are diversely branched.

The intra-branch pores also have characteristics similar to those of the inter-branch pores. That is, the intra-branch pores have a thick and long waistless shape and are diversely branched in the branch. Therefore, it is considered that in the dendritic carbon nanostructure according to the present disclosure, the gas diffusion resistance in the catalyst layer is likely to decrease.

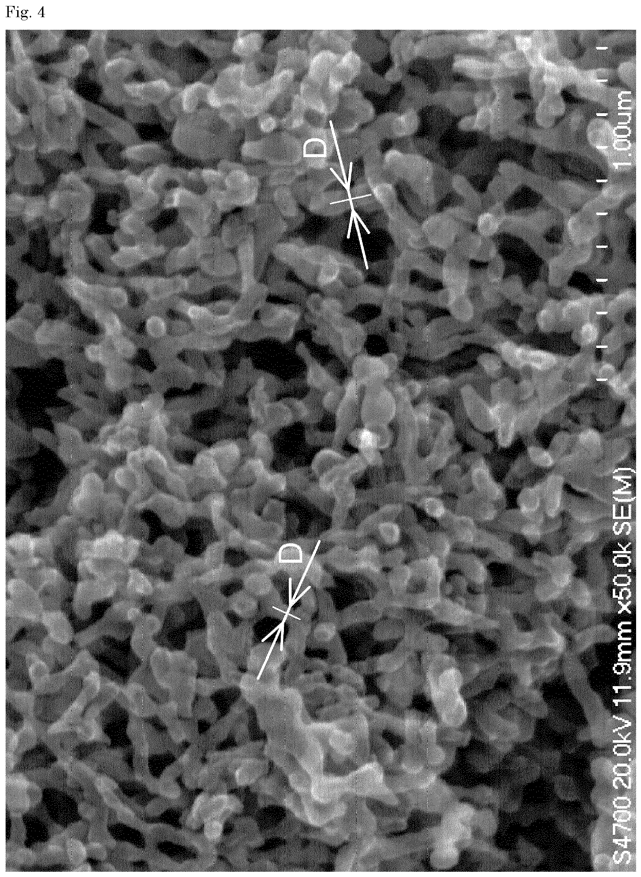

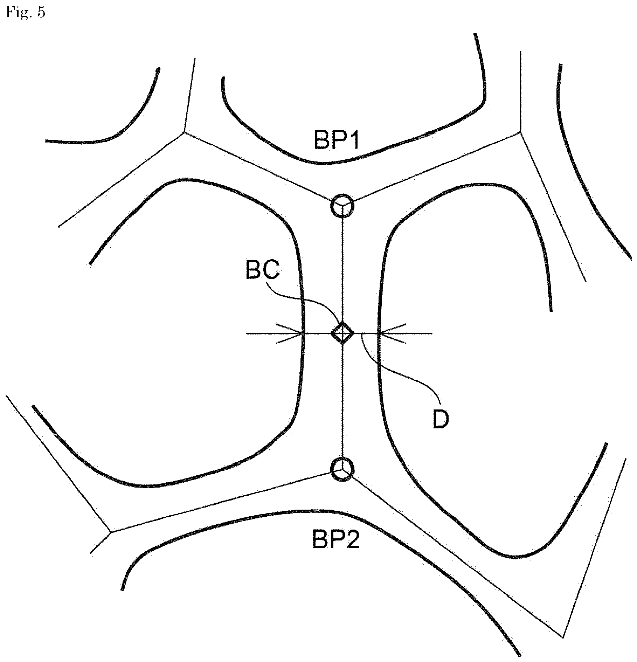

In the present disclosure, the dendritic carbon nanostructure represents a dendritic carbon structure having a branch diameter of from 10 nm to 200 nm or less. The branch diameter is measured as follows: using a scanning electron microscope (SEM; SU-9000 manufactured by Hitachi High-Technologies Corporation), SEM images at 5 visual fields (size 2.5 µm × 2 µm) are observed at 100000-fold magnification, and branch diameters are measured at 20 positions in each visual field, and the mean value of total 100 measurements is regarded as the branch diameter. The branch diameter to be measured is the branch diameter obtained by measuring the thickness at the center between the adjacent two branch points (the middle part of the branched branch) of a branch of interest (refer to Fig. 4, D in Fig. 4 stands for a branch diameter at one position). Referring to Fig. 5, the method of measuring a branch diameter will be described. In Fig. 5, one branch of interest is shown. For this branch of interest, a branch point BP 1 and a branch point BP 2 are specified. Next, the specified branch point BP 1 and branch point BP 2 are connected with a line segment, and the thickness (width) of the branch is measured on a perpendicular bisector BC of the line segment connecting the branch point BP 1 and the branch point BP 2. The measured thickness of the branch is a branch diameter D at one position. The branch length is represented by a distance from the branch point BP 1 to the branch point BP 2 (see Fig. 5). For example, in the present disclosure, the branch diameter of the dendritic carbon nanostructure is not particularly limited as long as it falls within the above range, and may be, for example, about from 50 nm to 100 nm. The branch length is not particularly limited, and may be, for example, about from 50 nm to 200 nm.

Hereinafter, an example of a preferred aspect of the present disclosure will be described in detail with reference to the drawings. In the present disclosure, constituent elements having substantially the same functional configuration are denoted by the same reference numerals, and redundant description will be omitted.

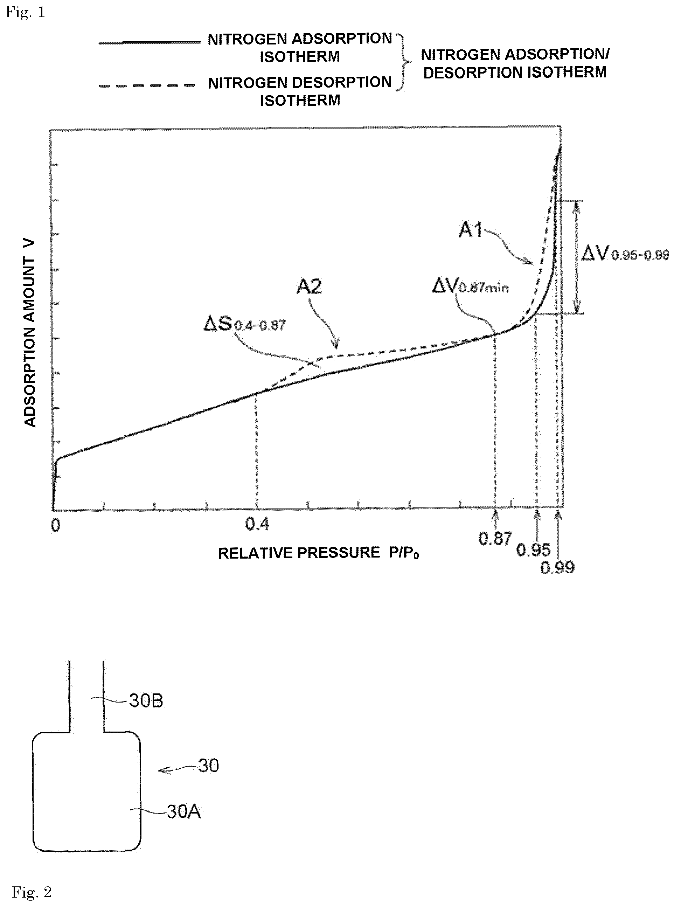

Fig. 1 is a graph schematically showing a nitrogen adsorption/desorption isotherm in the carbon material for a catalyst carrier of the present disclosure. Fig. 1 shows an aspect when the carbon material for a catalyst carrier is a dendritic carbon nanostructure, as a preferred aspect. The nitrogen adsorption/desorption isotherm shown in Fig. 1 exhibits two hysteresis loops in a range in which the relative pressure P/P₀ is 0.4 or more. Among the two hysteresis loops, a first hysteresis loop A1 exists on a side where the relative pressure is high, and a second hysteresis loop A2 exists on a side where the relative pressure is low. In the nitrogen adsorption/desorption isotherm shown in Fig. 1, the first hysteresis loop A1 exists in a range in which the relative pressure P/P₀ is 0.87 or more, and the second hysteresis loop A2 exists in a range in which the relative pressure P/P₀ is from 0.4 to 0.87.

In general, the nitrogen adsorption isotherm at a liquid nitrogen temperature (for example, 77 K) corresponds to adsorption to pores having a smaller pore diameter as the relative pressure is lower. Therefore, the first hysteresis loop A1 is formed by the characteristics of the inter-branch pores, and the second hysteresis loop A2 is formed by the characteristics of the intra-branch pores.

A mechanism for generating a hysteresis loop and a guideline of the carbon material for a carrier using the hysteresis loop as an index based on the mechanism will be described in detail.

As shown in Fig. 1, in the desorption curve (nitrogen desorption isotherm), the relative pressure at which the adsorption volume reaches the same adsorption volume as that of the adsorption curve (nitrogen adsorption isotherm) is lower than that of the adsorption. That is, the adsorbed nitrogen is hardly desorbed. In a desorption process, nitrogen escapes from the most easily escaping path (that is, a path having large pores) among a plurality of desorption paths. However, in the desorption process, the adsorbed nitrogen is not desorbed until the relative pressure decreases to a pressure corresponding to the pore diameter. This is a hysteresis phenomenon. Forming a hysteresis loop means that adsorption and desorption coincide with each other at a certain relative pressure, and the effect of pores disappears. In the present disclosure, for example, the first hysteresis loop A1 disappears near a relative pressure of 0.87. The first hysteresis loop A1 represents a hysteresis phenomenon due to the inter-branch pores. Therefore, the fact that the hysteresis due to the inter-branch pores disappears near a relative pressure of 0.87 indicates that the pores due to the branches disappear near 0.87. That is, depending on the size of the distribution width in the branch diameter and the branch length, the dendritic carbon nanostructure also has a considerable distribution width in the pore diameter due to the dendritic structure. As a result, the hysteresis is not closed, and the carbon material does not form two hysteresis loops. Therefore, when the carbon material for a carrier according to the present disclosure is a dendritic carbon nanostructure, the branch structure of the dendritic carbon nanostructure is required to have a structure in which the branch diameter and the branch length are uniform so as to form two loops.

Specifically, a theory that a hysteresis loop is generated when a bottleneck type pore exists is proposed. Fig. 2 illustrates a bottleneck type pore 30 as an example of a bottleneck type pore formed in the carbon material. The bottleneck type pore 30 includes a bottle portion 30A and a neck portion 30B communicating with the bottle portion 30A. The diameter of the bottle portion 30A is larger than the diameter of the neck portion 30B. The neck portion 30B communicates with the outer surface of the carbon material or other pores in the carbon material.

In this theory, as described below, a hysteresis loop is generated due to a difference between the adsorption process and the desorption process. That is, in the adsorption process, the adsorption thickness of nitrogen gradually increases according to the relative pressure of nitrogen gas. In this process, first, the neck portion of the bottleneck type pore is blocked by adsorption. At that time, even when nitrogen is adsorbed to the bottle portion with a thickness corresponding to the neck portion, the bottle portion is not completely filled since the diameter of the bottle portion is larger than the diameter of the neck portion. In this state, even when the neck portion is blocked, the external pressure and the pressure inside the bottle portion are in equilibrium through a nitrogen adsorption layer. Therefore, when the relative pressure of the nitrogen gas further increases (that is, the external pressure increases), the pressure inside the bottle portion also increases. Thus, the adsorption corresponding to the external pressure also proceeds in the bottle portion, and the nitrogen adsorption layer of the bottle portion becomes thick even when the neck portion remains blocked. When the external pressure further increases, the bottle portion is also completely blocked by the nitrogen adsorption layer at last. That is, even in the case of the bottleneck type pore, the adsorption similar to the normal pore structure without the neck portion proceeds in the adsorption process. However, strictly speaking, when the neck portion is blocked by the nitrogen adsorption layer, at least a part of the nitrogen adsorption layer adsorbed on the neck portion becomes a liquid phase. It is known that the pressure inside such a liquid phase (that is, the pressure inside the bottle portion) is slightly smaller than the external pressure due to the surface tension of the liquid phase. This phenomenon is called a capillary phenomenon. Therefore, in the adsorption isotherm of the bottleneck type pore, the relative pressure required to obtain the same adsorption amount as that of the non-bottleneck type pore shifts to a slightly high value.

Next, the desorption process of nitrogen from a state where all the pores of the bottleneck type pores are filled is considered. In the desorption process, the neck portion is not opened until the external pressure drops to a pressure at which the blockage of the neck portion is released. In the process in which the external pressure decreases to the pressure at which the blockage of the neck portion is released, the external pressure becomes a pressure at which the adsorption of the bottle portion is released. However, even in this state, the nitrogen adsorbed inside the bottle portion for blocking the neck portion is held as it is (so-called blocking phenomenon). When the desorption isotherm is measured at a liquid nitrogen temperature (for example, 77 K) using nitrogen as an adsorbent, the nitrogen adsorption layer in the neck portion starts boiling (cavitation) at a relative pressure higher than the pressure at which the neck portion opens. Therefore, nitrogen adsorbed to the bottle portion and the neck portion is desorbed and released at once at a pressure at which the nitrogen adsorption layer starts to boil. It is known that this pressure is near a relative pressure P/P₀ = 0.4 when the bottleneck type pores constitute pores in the carbon particles (intra-branch pores in the dendritic carbon nanostructure). The relative pressure P/P₀ near 0.4 is a relative pressure inherent to nitrogen adsorption that does not depend on the pore structure of the adsorbent. That is, the relative pressure P/P₀ at which the second hysteresis loop A2 closes (that is, the pressure at which cavitation starts) does not depend on the pore structure, and is determined by the adsorbent (nitrogen molecules) and the measurement temperature. Therefore, in the present disclosure, the presence of the bottleneck type pore and the size of the volume of the bottle portion are determined from the amount of nitrogen desorbed and released by cavitation. In the present disclosure, the number of bottleneck type pores is reduced, and even if the bottleneck type pore exists, the volume of the bottle portion is reduced. The hysteresis phenomenon will be described in detail in the following literature, for example.

(Literature): Adsorption Hysteresis of Nitrogen and Argon in Pore Networks and Characterization of Novel Micro- and Mesoporous Silicas, Langmuir 2006, 22, 756-764

As is apparent from Fig. 2, since the diameter of the neck portion 30B is smaller than the diameter of the bottle portion 30A, gas hardly flows into the bottle portion 30A. The gas in the bottle portion 30A is less likely to flow out to the outside. Therefore, it can be said that the gas diffusion resistance increases as the volume ratio of the bottleneck type pores to the volume of all the pores in the catalyst carrier increases.

The volume ratio of the bottleneck type pores corresponds to the area of the hysteresis loop. That is, the smaller the area of the hysteresis loop is, the smaller the volume ratio of the bottleneck type pores is.

As described above, in order to reduce the overvoltage at the time of a large current, it is important to increase the pore diameter between the branches and increase the pore volume in the dendritic carbon nanostructure. This is expressed again in a hysteresis loop of nitrogen gas adsorption as follows.

The "large pore diameter" corresponds to an adsorption curve rising in a region where the relative pressure is high. Specifically, in the Barrett-Joyner-Halender (BJH) analysis, the relative pressure of 0.87, the relative pressure of 0.95, the relative pressure of 0.97, and the relative pressure of 0.98 correspond to a diameter of 20 nm, a diameter of 38 nm, a diameter of 64 nm, and a diameter of 93 nm, respectively. When the carbon material for a catalyst carrier of the present disclosure is a dendritic carbon nanostructure, the branch diameter is, for example, approximately 50 nm to 100 nm, and thus the relative pressure at which adsorption rises is 0.97 to 0.98. Since the branch diameters are uniform, the rising of the adsorption is steep. For example, KETJEN BLACK EC300, which is a typical porous carbon based on carbon black having a dendritic structure, has a particle diameter of around 40 nm, and adsorption rises at a relative pressure of around 0.95 and varies in pore diameter, so that the inclination of adsorption is smaller than that of the dendritic carbon nanostructure.

On the other hand, the "large pore volume" corresponds to the adsorption amount of gas adsorption. Specifically, when the carbon material for a catalyst carrier of the present disclosure is a dendritic carbon nanostructure, adsorption between branches corresponds to an adsorption amount at a relative pressure of from 0.95 to 0.99. The present inventors have succeeded in quantitatively defining a structure corresponding to inter-branch in the present disclosure by taking a correlation between large current characteristics and the numerical value.

In the present disclosure, the areas of the first hysteresis loop A1 and the second hysteresis loop A2 are preferably small. As described above, in the present disclosure, the inter-branch pores are diversely branched between branches, and have a relatively thick and waistless shape. Similarly, the intra-branch pores are diversely branched in the branch, and have a relatively thick and waistless shape. For this reason, there are few bottleneck type pores between and in the branches, and as a result, the areas of the first hysteresis loop A1 and the second hysteresis loop A2 become small. Since the inter-branch pores are relatively thick, the first hysteresis loop A1 closes at a relatively high (that is, around 0.87) relative pressure P/P₀.

These first hysteresis loop A1 and second hysteresis loop A2 are characteristic ones observed in the nitrogen adsorption/desorption isotherm of the dendritic carbon nanostructure as the carbon material for a catalyst carrier in the present disclosure. Two hysteresis loops are not observed in the nitrogen adsorption/desorption isotherm of other conventional carbon materials. Therefore, the pore structure specific to the dendritic carbon nanostructure in the present disclosure can be evaluated based on the nitrogen adsorption/desorption isotherm.

As described above, in the dendritic carbon nanostructure in the present disclosure, the intra-branch pores have a thick and long waistless shape and are diversely branched in the branch. From the viewpoint of further reducing the overvoltage at the time of a large current, it is preferable to increase the size of the intra-branch pores and enhance the branching property of the intra-branch pores. Increasing the intra-branch pores appears in the second hysteresis loop A2. Specifically, since the gas diffusivity in the pores is improved, the area of the second hysteresis loop A2 is reduced.

In the dendritic carbon nanostructure, the inter-branch pores have a thick and long waistless shape and are diversely branched between branches. From the viewpoint of further reducing the overvoltage at the time of a large current, it is preferable to reduce the thickness of the branch. The distribution of the branch diameters is preferably sharp. As a result, the gas easily flows in the inter-branch pores. Increasing the inter-branch pores and sharpening the distribution of the branch diameters appear in the first hysteresis loop A1. Specifically, since the distribution of the diameters of the inter-branch pores is narrowed and the distribution of the diameters of the inter-branch pores is concentrated on the longer diameter side, in the nitrogen adsorption isotherm, an adsorption amount difference ΔV_{0.95-0.99} between an adsorption amount at a relative pressure P/P₀ = 0.99 and an adsorption amount at a relative pressure P/P₀ = 0.95 increases.

The present inventors have studied a method for producing a dendritic carbon nanostructure in order to prepare a dendritic carbon nanostructure satisfying the above requirements. The dendritic carbon nanostructure is generally prepared by ejecting a metal from metal acetylide. The metal acetylide is prepared by adding acetylene to a metal salt solution while irradiating the metal salt solution with ultrasonic waves. In this process, a nucleus of the metal acetylide is generated in the solution, and the metal acetylide grows from the nucleus. The metal salt solution is prepared by dissolving a metal salt in an aqueous ammonia solution. Therefore, in order to reduce the concentration of the nucleus of the metal acetylide generated in the metal salt solution, the present inventors have significantly reduced the concentration of the metal salt as compared with the conventional process, and increased the concentration ratio of ammonia to the anion component of the metal salt. The addition rate of acetylene was lowered in order to slowly perform the production (growth) reaction of the metal acetylide. The concentration of the dissolved acetylene gas was lowered in order to slowly perform the production reaction of the metal acetylide. Specifically, the metal salt solution was kept warm. That is, the temperature during the production reaction of the metal acetylide was maintained high.

The present inventors decided to jet a metal from the metal acetylide after compression-molding the metal acetylide. That is, by heating the metal acetylide, the metal acetylide causes an explosive self-decomposition reaction, and the metal is ejected from the metal acetylide. As a result, an intermediate that is a mixture of a metal layer and a carbon layer (hereinafter, also referred to as "carbon nano intermediate") is produced. The present inventors have made it difficult for reaction heat to escape from the metal acetylide by compression-molding the metal acetylide. This makes it possible to efficiently supply reaction heat to the unreacted part of the metal acetylide. That is, the reaction heat itself of the metal acetylide is unchanged in principle. Therefore, by making it difficult for such reaction heat to escape to the outside, the amount of heat supplied to the unreacted part of the metal acetylide is relatively increased, and the temperature of the metal acetylide is smoothly increased. The present inventors have decided to increase the temperature rising rate of the metal acetylide in order to further smoothly raise the temperature of the metal acetylide. Thus, the reaction of the metal acetylide was promoted.

As a result, in the dendritic carbon nanostructure that is s final product, the intra-branch pores could be further thickened, and the branching property of the intra-branch pores could be further enhanced. Specifically, an area ΔS_{0.4-0.87} of the second hysteresis loop A2 could be set to 5 mL/g to 50 mL/g. The thickness of the branches could be reduced while the skeleton of the dendritic structure was maintained. The distribution of the branch diameters was also narrowed. Specifically, in the nitrogen adsorption isotherm, the adsorption amount difference ΔV_{0.95-0.99} between the adsorption amount at P/P₀ = 0.99 and the adsorption amount at P/P₀ = 0.95 was from 500 mL/g to 1100 mL/g. It could also be confirmed by a scanning electron microscope (SEM) that the skeleton of the dendritic structure of the dendritic carbon nanostructure is maintained and the thickness of the branches is reduced.

The present inventors have enhanced the durability of the dendritic carbon nanostructure by treating the dendritic carbon nanostructure at high temperatures. The present inventors obtained the carbon material for a catalyst carrier according to the present disclosure based on the above findings.

In the present disclosure, exhibiting two hysteresis loops means that there are two hysteresis loops. A state where the hysteresis loop is closed indicates that, at the start point and the end point of the hysteresis loop, a value obtained by subtracting the adsorption amount (ΔV) indicated by the adsorption isotherm from the adsorption amount indicated by the desorption isotherm is 20 mL/g or less.

Exhibiting two hysteresis loops includes the following aspects.
(1) An aspect in which an end point of the first hysteresis loop and a start point of the second hysteresis loop are the same. That is, an aspect in which the relative pressures at the end point of the first hysteresis loop and the start point of the second hysteresis loop are the same.
(2) An aspect in which an end point of the first hysteresis loop and a start point of the second hysteresis loop are separated. That is, an aspect in which the relative pressures at the end point of the first hysteresis loop and the start point of the second hysteresis loop are different.

In the carbon material for a catalyst carrier according to the present disclosure, it is preferable that, among the two hysteresis loops, the first hysteresis loop exists in a range in which the relative pressure P/P₀ is 0.87 or more and the second hysteresis loop exists in a range in which the relative pressure P/P₀ is from 0.4 to 0.87. When the two hysteresis loops exist in this range, the overvoltage at the time of a large current is easily reduced. In the same point, the carbon material for a catalyst carrier according to the present disclosure more preferably satisfies the following requirements.

A more preferred aspect of the carbon material for a catalyst carrier according to the present disclosure satisfies the following requirements (A), (B), and (C): In the present disclosure, the nitrogen adsorption/desorption isotherm is measured at a liquid nitrogen temperature (for example, 77 K).
(A) a specific surface area determined by BET analysis of a nitrogen adsorption isotherm is from 450 m²/g to 1500 m²/g,
(B) the nitrogen adsorption/desorption isotherm forms a first hysteresis loop in a range in which a relative pressure P/P₀ is 0.87 or more, and a minimum value ΔV_{0.87min} of an adsorption amount difference ΔV_{0.87} of the first hysteresis loop within a range in which the relative pressure P/P₀ is 0.87 ± 0.03 is 20 mL/g or less, and
(C) the nitrogen adsorption/desorption isotherm forms a second hysteresis loop within a range in which the relative pressure P/P₀ is 0.4 to 0.87, and an area ΔS_{0.4-0.87} of the second hysteresis loop is from 5 mL/g to 50 mL/g.

### (1-1. Requirement (A))

The specific surface area determined by BET analysis of a nitrogen adsorption isotherm is 450 m²/g to 1500 m²/g. This makes it possible to support more catalyst components. When the BET specific surface area is less than 450 m²/g, the carrying property of the catalyst component may be deteriorated. When the BET specific surface area is more than 1500 m²/g, it may be difficult to achieve both the physical strength and oxidation wear durability of the carbon material for a catalyst carrier. A preferred lower limit value of the BET specific surface area is 500 m²/g or more, and a preferred upper limit value of the BET specific surface area is 1450 m²/g or less. The BET specific surface area may be measured by a method described in Examples described below.

### (1-2. Requirement (B))

The nitrogen adsorption/desorption isotherm exhibits a first hysteresis loop in a range in which a relative pressure P/P₀ is 0.87 or more, and a minimum value ΔV_{0.87min} of an adsorption amount difference ΔV_{0.87} of the first hysteresis loop within a range in which the relative pressure P/P₀ is 0.87 ± 0.03 is 20 mL/g or less. ΔV_{0.87} may be measured by a method described in Examples described below.

The "minimum value ΔV_{0.87min} of the adsorption amount difference ΔV_{0.87} of the first hysteresis loop within a range in which the relative pressure P/P₀ is 0.87 ± 0.03 is 20 mL/g or less" means that the first hysteresis loop closes within a range of a relative pressure P/P₀ = 0.87 ± 0.03. The adsorption amount difference ΔV_{0.87} of the first hysteresis loop is a value obtained by subtracting the adsorption amount indicated by the adsorption isotherm from the adsorption amount indicated by the desorption isotherm. The minimum value ΔV_{0.87min} of the adsorption amount difference ΔV_{0.87} is 20 mL/g or less within a range in which the relative pressure P/P₀ is 0.87 ± 0.03. That is, the minimum value ΔV_{0.87min} of ΔV_{0.87} is from 0 to 20 mL/g. In Fig. 1, when the relative pressure P/P₀ is 0.87, the adsorption amount difference ΔV_{0.87} is minimum (see Fig. 1).

### (1-3. Requirement (C))

The nitrogen adsorption/desorption isotherm at a liquid nitrogen temperature exhibits the second hysteresis loop within a range in which the relative pressure P/P₀ is 0.4 to 0.87, and the area ΔS_{0.4-0.87} of the second hysteresis loop is from 5 mL/g to 50 mL/g (see Fig. 1). A preferred lower limit value of ΔS_{0.4-0.87} is 7 mL/g or more, and a preferred upper limit value of ΔS_{0.4-0.87} is 45 mL/g or less. ΔS_{0.4-0.87} may be measured by a method described in Examples described below.

Also in a conventional dendritic carbon nanostructure, the intra-branch pores have a thick and long waistless shape and are diversely branched in the branch. In the carbon material for a catalyst carrier according to the present disclosure, while such characteristics of the inter-branch pores are maintained, the intra-branch pores are further thickened, and the branching property of the intra-branch pores is further enhanced. Thus, the second hysteresis loop becomes very small. Specifically, the area ΔS_{0.4-0.87} of the second hysteresis loop is from 5 to 50 mL/g. As a result, the gas diffusion resistance is lowered, and the overvoltage at the time of a large current is reduced. When the area ΔS_{0.4-0.87} of the second hysteresis loop is 50 mL/g or less, the volume of the bottleneck type pores occupying the total volume of the intra-branch pores decreases. Therefore, the gas diffusion resistance is suitably lowered. When the area ΔS_{0.4-0.87} of the second hysteresis loop is 5 mL/g or more, a decrease in the strength of the carbon material for a catalyst carrier is suppressed. As a result, the overvoltage at the time of a large current is decreased, which is preferable.

### (1-4. Requirement (D))

The carbon material for a catalyst carrier preferably further satisfies the following requirement (D) in addition to the requirements (A) to (C). The requirement (D) is that, in the nitrogen adsorption isotherm, an adsorption amount difference ΔV_{0.95-0.99} between an adsorption amount at a relative pressure P/P₀ = 0.99 and an adsorption amount at a relative pressure P/P₀ = 0.95 is from 500 mL/g to 1100 mL/g (see Fig. 1). A preferred lower limit value of ΔV_{0.95-0.99} is 550 mL/g or more, and a preferred upper limit value of ΔV_{0.95-0.99} is 950 mL/g or less. ΔS_{0.4-0.87} may be measured by a method described in Examples described below.

As described above, in the dendritic carbon nanostructure, the inter-branch pores have a thick and long waistless shape and are diversely branched between branches. In the carbon material for a catalyst carrier according to the present disclosure, while such characteristics of the inter-branch pores are maintained, the inter-branch pores are further thickened, and the variation in diameter is also reduced. Therefore, in the nitrogen adsorption isotherm, an adsorption amount difference ΔV_{0.95-0.99} between the adsorption amount at a relative pressure P/P₀ = 0.99 and the adsorption amount at a relative pressure P/P₀ = 0.95 increases. That is, the distribution of the diameters of the inter-branch pores is concentrated on the longer diameter side. Specifically, the adsorption amount difference ΔV_{0.95-0.99} is from 500 mL/g to 1100 mL/g. As a result, the gas diffusion resistance is lowered, and the overvoltage at the time of a large current is reduced. When the adsorption amount difference ΔV_{0.95-0.99} is 500 mL/g or more, the distribution of the diameters of the inter-branch pores becomes narrow, and the diffusion resistance sufficiently decreases. It is very difficult to prepare a carbon material for a catalyst carrier in which the adsorption amount difference ΔV_{0.95-0.99} is more than 1100 mL/g.

### (1-5. Requirement (E))

The carbon material for a catalyst carrier preferably further satisfies requirement (E) that a half-value width of a G-band detected in a range of 1500 cm⁻¹ to 1700 cm⁻¹ by Raman spectrometry is from 45 cm⁻¹ to 70 cm⁻¹ in addition to the requirements (A) to (C) or the requirements (A) to (D). In this case, the oxidation wear resistance of the carbon material for a catalyst carrier is increased, and the durability is improved. That is, even when the starting and stopping of the polymer electrolyte fuel cell using the carbon material for a catalyst carrier are repeated, the carbon material for a catalyst carrier is less likely to be oxidized and consumed.

When the half-value width of the G-band is from 45 cm⁻¹ to 70 cm⁻¹, the graphitization degree (crystallinity) of the carbon material for a catalyst carrier is improved. Therefore, oxidation wear resistance is improved. When the half-value width of the G-band is more than 70 cm⁻¹, the oxidation wear resistance of the carbon material for a catalyst carrier decreases, and as a result, the overvoltage at the time of a large current increases. When the half-value width of the G-band is less than 45 cm⁻¹, the shapes of the intra-branch pore and the inter-branch pore are easily maintained, and as a result, the requirements (B) and (C) may not be satisfied. In the half-value width of the G-band, a preferred lower limit value is 48 cm⁻¹ or more, and a preferred upper limit value is 68 cm⁻¹ or less. The half-value width of the G-band may be measured by a method described in Examples described below.

### <2. Method for Producing Carbon Material for Catalyst Carrier>

Next, an example of a preferred method for producing the carbon material for a catalyst carrier will be described. According to the preferred method for producing the carbon material for a catalyst carrier, the nitrogen adsorption isotherm exhibits two hysteresis loops in a range of a relative pressure of 0.4 or more, and the requirements (A) to (E) can also be satisfied. An example of a preferred method for producing the carbon material for a catalyst carrier includes a metal acetylide producing step, a first heat treatment step, and a second heat treatment step. The method may further include a washing treatment step between the first heat treatment step and the second heat treatment step.

### (2-1. Metal Acetylide Producing Step)

In this step, acetylene is added to the metal salt solution while irradiating the metal salt solution with ultrasonic waves to prepare metal acetylide. This step produces a precipitate of metal acetylide (for example, silver acetylide, copper acetylide, and the like) in the metal salt solution.

Examples of the metal salt include silver nitrate and cuprous chloride. Among them, silver nitrate is preferable. The metal salt solution is obtained by dissolving a metal salt in an aqueous ammonia solution. Examples of the method of adding acetylene include a method of blowing acetylene gas into a metal salt solution. The ultrasonic irradiation can be performed using, for example, an ultrasonic transducer, an ultrasonic cleaner, or the like. It is preferable to replace oxygen in the metal salt solution with an inert gas before adding the acetylene gas. The reason for this is that an unintended explosive decomposition reaction of the metal acetylide is suppressed. The time for blowing the inert gas into the metal salt solution may be about 40 minutes to 60 minutes. Examples of the inert gas include argon and nitrogen.

In the present disclosure, in order to reduce the concentration of the nucleus of the metal acetylide generated in the metal salt solution, the concentration of the metal salt is significantly reduced as compared with the conventional process, and the concentration ratio of ammonia to the anion component of the metal salt is increased. Since the specific concentration of the metal salt varies depending on the metal species to be used, the concentration thereof may be specified by an experiment. The same applies to the concentration ratio of ammonia. That is, when the concentration of the metal salt is high or the concentration ratio of ammonia is low, the requirement (B) cannot be satisfied, and it becomes difficult to satisfy any one of the requirements (A), (C), and (D).

For example, when the metal salt is silver nitrate, the concentration of the metal salt is 0.1 mass% to less than 5 mass% with respect to the mass of the metal salt solution. The upper limit of the concentration of the metal salt is preferably 2 mass% or less. The concentration ratio of ammonia to the anion component of the metal salt is 1 or more and preferably 3 or more. Thereby, a carbon material for a catalyst carrier satisfying the above-described requirements (A) to (D) can be prepared. When the concentration of the metal salt is set to 0.1 mass% or more, the strength of the carbon material for a catalyst carrier that is s final product is secured. On the other hand, when the concentration of the metal salt is less than 5 mass%, or when the concentration ratio of ammonia to the anion component of the metal salt is 1 or more, the concentration of the nucleus of the metal acetylide generated in the metal salt solution is moderate. As a result, the adsorption amount difference ΔV_{0.95-0.99} is 500 mL/g to 1100 mL/g. That is, the distribution of the diameters of the inter-branch pores is narrowed, and the gas diffusion resistance is lowered. The first hysteresis loop is easily closed around a relative pressure P/P₀ = 0.87.

In the present disclosure, the addition rate of acetylene is lowered in order to slowly perform the production (growth) reaction of the metal acetylide. Specifically, for example, acetylene gas is slowly blown into the metal salt solution. Since the specific blowing flow rate varies depending on the metal species to be used, the concentration thereof may be specified by an experiment. That is, when the blowing flow rate of acetylene is high, the requirement (B) cannot be satisfied, and any one of the requirements (A), (C), and (D) is not satisfied. For example, when the metal salt is silver nitrate, the upper limit of the blowing flow rate of the acetylene gas is less than 20 mL/min. The blowing flow rate of the acetylene gas is preferably 15 mL/min or less and further preferably 10 mL/min or less. When the blowing speed of the acetylene gas is less than 20 mL/min, the area ΔS_{0.4-0.87} of the second hysteresis loop is 50 mL/g or less. That is, the thickness and branching property of the intra-branch pores are sufficient. The volume of the bottleneck type pores occupying the total volume of the intra-branch pores decreases. The first hysteresis loop is easily closed around a relative pressure of 0.87. The lower limit value of the blowing flow rate of the acetylene gas is not particularly limited, and may be 0.5 mL/min or more.

In the present disclosure, in order to reduce the concentration of the dissolved acetylene gas and reduce the reaction rate of the metal acetylide, the metal salt solution is kept warm. Since the specific temperature varies depending on the metal species to be used, the concentration thereof may be specified by an experiment. That is, when the temperature is high, the requirement (B) cannot be satisfied, and any one of the requirements (A), (C), and (D) is not satisfied. For example, when the metal salt is silver nitrate, the metal salt solution is kept at a temperature higher than 10°C. The temperature of the metal salt solution is preferably 20°C or higher and further preferably 60°C or higher. When the temperature of the metal salt solution is higher than 10°C, the adsorption amount difference ΔV_{0.95-0.99} is from 500 mL/g to 1100 mL/g. That is, the distribution of the diameters of the inter-branch pores is narrowed, and the gas diffusion resistance is lowered. The area ΔS_{0.4-0.87} of the second hysteresis loop is 50 mL/g or less. That is, the thickness and branching property of the intra-branch pores are sufficient. The volume of the bottleneck type pores in the total volume of the intra-branch pores decreases, and the first hysteresis loop is easily closed around a relative pressure of 0.87. The upper limit value of the temperature is not particularly limited, and may be 70°C or lower.

### (2-2. First Heat Treatment Step)

In the first heat treatment step, metal acetylide is heated to eject the metal from the metal acetylide. In the present disclosure, the metal acetylide is compression-molded, and then the metal acetylide is heated. That is, by heating the metal acetylide, the metal acetylide causes an explosive self-decomposition reaction, and the metal is ejected from the metal acetylide. As a result, a carbon nano intermediate is produced. In the present disclosure, since the metal acetylide is compression-molded, reaction heat hardly escapes from the metal acetylide. This makes it possible to efficiently supply reaction heat to the unreacted part of the metal acetylide. That is, the reaction heat itself of the metal acetylide is unchanged in principle. In the present disclosure, by making it difficult for such reaction heat to escape to the outside, the amount of heat supplied to the unreacted part of the metal acetylide is relatively increased, and the temperature of the metal acetylide is smoothly increased. In the present disclosure, in order to further smoothly raise the temperature of the metal acetylide, the temperature rising rate of the metal acetylide is increased. That is, in the present disclosure, the reaction of the metal acetylide is promoted by performing these treatments.

Since the molding pressure during compression molding can vary depending on the metal species constituting the metal acetylide, the molding pressure may be specified by an experiment. That is, when the molding pressure is insufficient, the reaction heat cannot be efficiently supplied to the unreacted part of the metal acetylide. As a result, the requirement (B) cannot be satisfied, and any one of the requirements (A), (C), and (D) is not satisfied. For example, when the metal acetylide is silver acetylide, the molding pressure is more than 0.5 kg/cm². This makes it possible to efficiently supply reaction heat to the unreacted part of the metal acetylide. The molding pressure is preferably 1.0 kg/cm² or more, more preferably 2.0 kg/cm² or more, and further preferably 2.5 kg/cm² or more. When the molding pressure is more than 0.5 kg/cm², the reaction heat can be efficiently supplied to the unreacted part of the metal acetylide. The first hysteresis loop is easily closed around a relative pressure of 0.87. The upper limit value of the molding pressure is not particularly limited, and may be 3 kg/cm² or less.

Since the temperature rising rate can also vary depending on the metal species constituting the metal acetylide, the molding pressure may be specified by an experiment. That is, when the temperature rising rate is low, the reaction heat cannot be efficiently supplied to the unreacted part of the metal acetylide. As a result, the requirement (B) cannot be satisfied, and any one of the requirements (A), (C), and (D) is not satisfied. For example, when the metal acetylide is silver acetylide, the temperature rising rate is more than 2°C/min. The temperature rising rate is preferably 5°C/min or more and further preferably 100°C/min or more. When the temperature rising rate is more than 2°C/min, the reaction heat can be efficiently supplied to the unreacted part of the metal acetylide. As a result, for example, the requirement (C) can be satisfied. The upper limit value of the temperature rising rate is not particularly limited, and may be 300°C/min or less.

The holding temperature after the temperature rise also varies depending on the metal species constituting the metal acetylide. For example, when the silver acetylide is heated, the holding temperature may be set to from 160°C to 200°C. When the copper acetylide is heated, the holding temperature may be set to from 210°C to 250°C.

### (2-3. Washing Treatment Step)

In the washing treatment step, a metal component is removed from the carbon nano intermediate to prepare a carbon material for a catalyst carrier. Specifically, for example, the carbon nano intermediate is washed with nitric acid (or a nitric acid aqueous solution). As a result, the metal component and the unstable carbon compound in the carbon nano intermediate are eluted in the nitric acid aqueous solution. As a result, not only the metal component but also the unstable carbon compound can be removed from the carbon nano intermediate. Through this step, a portion where the metal component is present becomes a void, so that the carbon material for a catalyst carrier has a three-dimensional structure having a large specific surface area.

### (2-4. Second Heat Treatment Step)

In the second heat treatment step, the carbon material for a catalyst carrier is heated at 1400°C to 2500°C in a vacuum or an inert gas atmosphere. The heating temperature is preferably 1600°C to 2100°C. When the heating temperature in the second heating step is 1400°C or higher, the crystallinity of the carbon material for a catalyst carrier is improved, and the durability in an environment in which a fuel cell is used is easily secured. As a result, the requirement (E) is easily satisfied. When the heating temperature is 2500°C or lower, the shapes of the intra-branch pores and the inter-branch pores are easily maintained. As a result, the requirements (B) and (C) are easily satisfied. From the viewpoint of enhancing the durability of the carbon material for a catalyst carrier, it is preferable to perform the second heat treatment.

The heating treatment time also affects the properties of the carbon material for a catalyst carrier. The heating treatment time may be set to 20 minutes to 200 minutes. The heating treatment time is considered to be related to uniformity of crystallinity. When the heating treatment time is too short, the crystallinity of only the outer surface of the carbon material is increased, but the crystallinity of the inside is not sufficiently developed in some cases, and the durability tends to be deteriorated. When the heating treatment time is 20 minutes or longer, the crystallinity of the inside is improved. On the other hand, when the heating treatment time is too long, industrial productivity is deteriorated. Any carbon material can be uniformly crystallized to the inside as long as the heating treatment time is substantially 200 minutes or shorter.

A method of heating the carbon material for a catalyst carrier is not particularly limited as long as it is a method by which the carbon material for a catalyst carrier can be heated at the above temperature. Examples of the heating method include resistance heating, microwave heating, high-frequency heating, and a heating method of a furnace type. Examples of the furnace type include a batch furnace and a tunnel furnace. The furnace type is not limited as long as an inert or depressurized atmosphere can be achieved.

As described above, the carbon material for a catalyst carrier of the present disclosure satisfies the requirements (A) to (C) by the above-described preferred production method. At least one of the requirement (D) or the requirement (E) is further satisfied by selection of a preferable condition. Therefore, by using this carbon material for a catalyst carrier as a catalyst carrier of a polymer electrolyte fuel cell, the gas diffusion resistance in the catalyst layer is reduced, and the overvoltage at the time of a large current is reduced.

### <3. Catalyst layer for polymer electrolyte fuel cell and polymer electrolyte fuel cell>

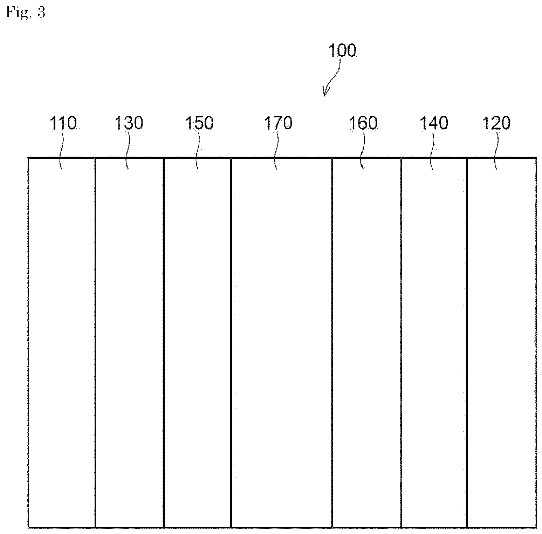

A polymer electrolyte fuel cell will be described together with a catalyst layer for a polymer electrolyte fuel cell. The carbon material for a catalyst carrier of the present disclosure is applicable to, for example, catalyst layers 150 and 160 provided in a polymer electrolyte fuel cell 100 illustrated in Fig. 3. Fig. 3 is a schematic diagram illustrating an example of a schematic configuration of a fuel cell according to the present disclosure. The polymer electrolyte fuel cell 100 includes separators 110 and 120, gas diffusion layers 130 and 140, catalyst layers 150 and 160, and an electrolyte membrane 170.

The separator 110 is a separator on the anode side, and introduces a reducing gas such as hydrogen into the gas diffusion layer 130. The separator 120 is a separator on the cathode side, and introduces an oxidizing gas such as oxygen gas or air into a gas diffusion aggregate phase. The type of the separators 110 and 120 is not particularly limited, and may be any separator used in a conventional fuel cell (for example, a polymer electrolyte fuel cell).

The gas diffusion layer 130 is a gas diffusion layer on the anode side, and diffuses the reducing gas supplied from the separator 110 and then supplies the reducing gas to the catalyst layer 150. The gas diffusion layer 140 is a gas diffusion layer on the cathode side, and diffuses the oxidizing gas supplied from the separator 120 and then supplies the oxidizing gas to the catalyst layer 160. The type of the gas diffusion layers 130 and 140 is not particularly limited, and may be any gas diffusion layer used in a conventional fuel cell (for example, a polymer electrolyte fuel cell). Examples of the gas diffusion layers 130 and 140 include porous carbon materials (such as carbon cloth and carbon paper), and porous metal materials (such as metal mesh and metal wool). Preferred examples of the gas diffusion layers 130 and 140 include a gas diffusion layer having a two-layer structure. Specifically, in the gas diffusion layers 130 and 140, a gas diffusion layer having a two-layer structure in which layers on the separators 110 and 120 side are gas diffusion fiber layers containing a fibrous carbon material as a main component and layers on the catalyst layers 150 and 160 side are micropore layers containing carbon black as a main component can be exemplified.

The catalyst layer 150 is a so-called anode. In the catalyst layer 150, an oxidation reaction of the reducing gas occurs, and protons and electrons are generated. For example, when the reducing gas is hydrogen gas, the following oxidation reaction occurs.

H₂ → 2H⁺ + 2e⁻ (E₀ = 0 V)

The protons generated by the oxidation reaction reach the catalyst layer 150 through the catalyst layer 160 and the electrolyte membrane 170. The electrons generated by the oxidation reaction reach the external circuit through the catalyst layer 150, the gas diffusion layer 130, and the separator 110. The electrons are introduced into the separator 120 after performing work (power generation) in the external circuit. Thereafter, the electrons reach the catalyst layer 160 through the separator 120 and the gas diffusion layer 140.

The configuration of the catalyst layer 150 serving as an anode is not particularly limited. The configuration of the catalyst layer 150 may be the same as that of the conventional anode, may be the same as that of the catalyst layer 160, and may be a configuration having higher hydrophilicity than that of the catalyst layer 160.

The catalyst layer 160 is a so-called cathode. In the catalyst layer 160, a reduction reaction of the oxidizing gas occurs, and water is generated. For example, when the oxidizing gas is oxygen gas or air, the following reduction reaction occurs. The water generated by the oxidation reaction is discharged to the outside of the polymer electrolyte fuel cell 100 together with the unreacted oxidizing gas.

O₂ + 4H⁺ + 4e⁻ → 2H₂O (E₀ = 1.23 V)

As described above, in the polymer electrolyte fuel cell 100, power is generated using an energy difference (potential difference) between the oxidation reaction and the reduction reaction. In other words, electrons generated by the oxidation reaction perform work in the external circuit.

The catalyst layer 160 preferably contains the carbon material for a catalyst carrier according to the present disclosure. That is, the catalyst layer 160 contains the carbon material for a catalyst carrier according to the present disclosure, an electrolyte material, and a catalyst component. As a result, the catalyst utilization rate in the catalyst layer 160 can be increased. The catalyst utilization rate of the polymer electrolyte fuel cell 100 can be increased.

The catalyst carrying rate in the catalyst layer 160 is not particularly limited, and is preferably 30 mass% or more and less than 80 mass%. When the catalyst carrying rate is in this range, the catalyst utilization rate is further increased. The catalyst carrying rate is represented by mass percentage of the catalyst component with respect to the total mass of catalyst-carrying particles (particles in which the catalyst component is supported on the carbon material for a catalyst carrier). When the catalyst carrying rate is less than 30 mass%, it may be necessary to make the catalyst layer 160 thick in order to make the polymer electrolyte fuel cell 100 withstand practical use. On the other hand, when the catalyst carrying rate is 80 mass% or more, catalyst aggregation easily occurs. When the catalyst layer 160 is too thin, flooding may occur.

A mass ratio I/C of a mass I of the electrolyte material and a mass C of the carbon material for a catalyst carrier in the catalyst layer 160 is not particularly limited, and is preferably more than 0.5 and less than 5.0. In this case, both the pore network and the electrolyte material network can be achieved, and the catalyst utilization rate is increased. On the other hand, when the mass ratio I/C is 0.5 or less, the electrolyte material network becomes poor, and the proton conduction resistance tends to increase. When the mass ratio I/C is 5.0 or more, the pore network may be divided by the electrolyte material. In either case, there is a possibility that the catalyst utilization rate decreases.

The thickness of the catalyst layer 160 is not particularly limited, and is preferably more than 5 µm and less than 20 µm. In this case, the oxidizing gas easily diffuses into the catalyst layer 160, and flooding hardly occurs. When the thickness of the catalyst layer 160 is 5 µm or less, flooding is likely to occur. When the thickness of the catalyst layer 160 is 20 µm or more, the oxidizing gas is less likely to diffuse in the catalyst layer 160, and the catalyst component near the electrolyte membrane 170 is less likely to work. That is, there is a possibility that the catalyst utilization rate decreases.

The electrolyte membrane 170 is configured using an electrolyte material having proton conductivity. The electrolyte membrane 170 introduces the protons generated by the oxidation reaction into the catalyst layer 160 (cathode). The type of the electrolyte material is not particularly limited, and may be any electrolyte material used in a conventional fuel cell, for example, a polymer electrolyte fuel cell. Examples of a suitable electrolyte material include electrolyte resins. Examples of the electrolyte resins include polymers into which a phosphate group, a sulfonic acid group, or the like is introduced. Specific examples thereof include a perfluorosulfonic acid polymer and a polymer into which benzenesulfonic acid or the like is introduced. Of course, the electrolyte material may be another type of electrolyte material. Examples of such an electrolyte material include electrolyte materials such as inorganic and inorganic-organic hybrid electrolyte materials. The polymer electrolyte fuel cell 100 may be a fuel cell that operates within a range of normal temperature (25°C) to 150°C.

### <4. Method for Manufacturing Polymer Electrolyte Fuel Cell>

A method for manufacturing the polymer electrolyte fuel cell 100 is not particularly limited, and any method similar to the conventional method may be used. However, as the catalyst carrier, the carbon material for a catalyst carrier according to the present disclosure is used. Among the catalyst layers 150 and 160, it is preferable to use the carbon material for a catalyst carrier according to the present disclosure as a catalyst carrier in at least the catalyst layer 160 serving as the cathode. Of course, the carbon material for a catalyst carrier according to the present disclosure may be used as a catalyst carrier of both catalyst layers in the catalyst layer 150 serving as the anode and the catalyst layer 160 serving as the cathode.

### Examples

### <1. Measurement method of each parameter>

Next, an experimental example of the carbon material for a catalyst carrier according to the present disclosure will be described. First, a measurement method of each parameter will be described.

### (1-1. Measurement method of nitrogen adsorption/desorption isotherm)

About 30 mg of a sample was weighed and taken, and vacuum-dried at 120°C for 2 hours. Next, the sample was set in an automatic specific surface area measuring apparatus (BELSORP MAX manufactured by MicrotracBEL Corp.). The nitrogen adsorption/desorption isotherm was measured at a measurement temperature (liquid nitrogen temperature) of 77 K using nitrogen gas as an adsorbent. The BET specific surface area was calculated by BET analysis of the nitrogen adsorption isotherm in a range in which the relative pressure P/P₀ was 0.05 to 0.15.

The number of hysteresis loops within a range in which the relative pressure P/P₀ was 0.4 or more was measured. The adsorption amount difference ΔV_{0.87} in the first hysteresis loop within a range in which the relative pressure P/P₀ was 0.87 ± 0.03 was measured, and the minimum value ΔV_{0.87min} of the adsorption amount difference ΔV_{0.87} was specified. The area ΔS_{0.4-0.87} of the second hysteresis loop was measured within a range in which the relative pressure P/P₀ was from 0.4 to 0.87. For the purpose of the measurement of ΔV_{0.87} and the measurement of ΔS_{0.4-0}.₈₇, the measurement interval of P/P₀ was made smaller than that in general measurement. Specifically, the measurement interval of P/P₀ was set to a fixed point in increments of 0.005. That is, the measurement accuracy of P/P₀ in measurement is 0.005.

The area ΔS_{0.4-0.87} of the hysteresis loop was calculated by the following method. At the measurement point of each relative pressure P/P₀, a value obtained by multiplying a difference ΔV between an adsorption amount V₁ in the adsorption process and an adsorption amount V₂ in the desorption process by 0.005 of the measurement interval of P/P₀ was calculated. ΔS_{0.4-0.87} was calculated as the integrated value for all the measurement points in a range of P/P₀ = 0.4 to 0.87.

Similarly, the adsorption amount difference ΔV_{0.87} was calculated with an accuracy of 0.005 increments within a range in which the relative pressure P/P₀ was 0.87±0.03.

The adsorption amount difference ΔV_{0.95-0.99} between the adsorption amount at a relative pressure P/P₀ = 0.99 and the adsorption amount at a relative pressure P/P₀ = 0.95 was measured. The results are collectively shown in Table 2.

When the first hysteresis loop exists in a range in which the relative pressure P/P₀ is 0.87 or more and the second hysteresis loop exists in a range in which the relative pressure P/P₀ is 0.4 to 0.87, "2" is written in the section of "Number of hysteresis loops" in Table 2. When only one hysteresis loop exists, "1" is when in the section of "Number of hysteresis loops" in Table 2.

### (1-2. Measurement Method of Raman Spectroscopy Spectrum)

About 3 mg of a sample was weighed and taken, and a Raman spectroscopy spectrum was measured using a laser Raman spectrophotometer (NRS-3100 manufactured by JASCO Corporation). A peak in a range of 1500 cm⁻¹ to 1700 cm⁻¹ called a G-band was extracted from the Raman spectroscopy spectrum obtained under the following measurement conditions, and the half-value width (ΔG) of this peak was measured. The results are collectively shown in Table 2.

### -Measurement Conditions-

Excitation laser: 532 nm, laser power: 10 mW (sample irradiation power: 1.1 mW), microscopic arrangement: Backscattering, objective lens: ×100 times, spot diameter: 1 µm, exposure time: 30 sec, observation wave number: 2000 cm⁻¹ to 300 cm⁻¹, integration number: 6 times

### <2. Preparation of Carbon Material for Catalyst Carrier>

Carbon materials E1-1 to E6-8 and C1-1 to C6-2 for a catalyst carrier were prepared by performing each operation in the following steps.

### (2-1. Metal Acetylide Producing Step)

First, silver nitrate was dissolved in an aqueous ammonia solution to prepare a silver nitrate solution. The ammonia concentration in the silver nitrate solution was 2.0 mass%. The specific concentration of the silver nitrate is shown in Table 1.

In order to investigate the influence of the concentration of the silver nitrate, the concentration of the silver nitrate was varied for each carbon material when carbon materials E1-1 to E1-6 and C1-1 to C1-2 for a catalyst carrier were prepared.

Argon gas was then blown into the silver nitrate solution for 60 minutes to replace oxygen dissolved in the silver nitrate solution with an inert gas. Then, acetylene gas was blown into the silver nitrate solution at a predetermined flow rate while the silver nitrate solution was stirred with a stirrer. During the blowing of the acetylene gas, the silver nitrate solution was kept at a predetermined temperature. Specific values of the temperature of the silver nitrate solution and the blowing flow rate of the acetylene gas are shown in Table 1.

In order to investigate the influence of the temperature of the silver nitrate solution, the temperature of the silver nitrate solution was varied for each carbon material when carbon materials E2-1 to E2-5 and C2-1 for a catalyst carrier were prepared. In order to investigate the influence of the blowing flow rate of the acetylene gas, the blowing flow rate was varied for each carbon material when carbon materials E3-1 to E3-5 and C3-1 to C3-2 for a catalyst carrier were prepared.

As a result, a white solid of silver acetylide was precipitated in the silver nitrate solution. When the blown acetylene gas started to be discharged as bubbles in the solution, it was determined that all the silver nitrate in the silver nitrate solution had reacted with the acetylene gas, and the blowing was terminated. The precipitate in the silver nitrate solution was then filtered through a membrane filter and the resulting precipitate was re-dispersed in methanol. The methanol dispersion of the precipitate was then filtered again. The precipitate was taken out to a petri dish, and the precipitate was impregnated with a small amount of methanol.

### (2-2. First Heat Treatment Step)

About 0.5 g (mass containing methanol) of the precipitate impregnated with methanol (that is, silver acetylide) was weighed. The weighed precipitate was then placed in a stainless steel pellet mold having a diameter of 5 mm, and slowly pressurized at a predetermined pressure (molding pressure). In this way, a pellet of silver acetylide was prepared. The specific molding pressure is shown in Table 1.

In order to investigate the influence of the molding pressure, the molding pressure was varied for each carbon material when carbon materials E4-1 to E4-4 and C4-1 to C4-3 for a catalyst carrier were prepared. The molding pressure "None" of the carbon material C4-1 for a catalyst carrier means that no compression was performed. For E4-3 to E4-4, the silver acetylide synthesis conditions were also changed in addition to the molding pressure.

The pellet of silver acetylide was transferred to a stainless steel cylindrical container having a diameter of about 5 cm, the cylindrical container was placed in a vacuum heating electric furnace, and vacuum drying was performed at 60°C for about 15 minutes to 30 minutes.

The silver acetylide in the cylindrical container was heated to 200°C at a predetermined temperature rising rate as it was (that is, the silver acetylide was not taken out from the cylindrical container). In this process, the silver acetylide caused an explosive self-decomposition reaction, and silver spurted from the silver acetylide. As a result, a carbon nano intermediate that is a mixture of a metal layer and a carbon layer was produced. The specific temperature rising rate is shown in Table 1. In order to investigate the influence of the temperature rising rate, the temperature rising rate was varied for each carbon material when carbon materials E5-1 to E5-6 and C5-1 for a catalyst carrier were prepared.

### (2-3. Washing Treatment Step)

The carbon nano intermediate obtained in the first heat treatment step was washed with concentrated nitric acid having a concentration of 60 mass%. Thus, the silver particles remaining on the surface of the carbon nano intermediate and other unstable carbon compounds were removed. Thereafter, the carbon material for a catalyst carrier was washed with water.

### (2-4. Second Heat Treatment Step)

The carbon material for a catalyst carrier washed in the washing treatment step was heated at a predetermined temperature for 2 hours to increase the graphitization degree of the carbon material for a catalyst carrier. Specific heating temperature and heating treatment time are shown in Table 1.

In order to show the influence of the heating temperature and the heating treatment time, the combination of the heating temperature and the heating treatment time was varied for each carbon material when carbon materials E6-1 to E6-8 and C6-1 to C6-2 for a catalyst carrier were prepared.

Carbon materials E1-1 to E6-8 and C1-1 to C6-2 for a catalyst carrier were prepared by the above steps. The physical property values of these carbon materials for a catalyst carrier are shown in Table 2.

As a commercially available carbon material for a catalyst carrier, KETJEN BLACK EC600JD (manufactured by Lion Corporation) was prepared. EC600JD was heat-treated in an argon stream at 1800°C for 2 hours to prepare EC600JD-1800. These Ketjen blacks have a dendritic structure similarly to the dendritic carbon nanostructure, also have developed intra-branch pores, and have a large BET specific surface area.

CNovel-MH (manufactured by TOYO TANSO CO., LTD.) was prepared. CNovel-MH was heat-treated in an argon stream at 2000°C for 2 hours to prepare MH-2000. These carbon materials are porous carbon materials having no dendritic structure. These carbon materials have many pores formed in the carbon particles.

When the pores are connected to each other, gas diffusivity is enhanced. For this purpose, MH-2000 was heat-treated in the air to oxidize and consume carbon. Specifically, a horizontal tubular electric furnace was used, the gas to be circulated was dry air, and the gas was treated at 560°C for 1 hour (this carbon material was referred to as MH-2000-Air560). This air oxidation treatment caused a weight loss of 46 mass%. The area of the hysteresis loop was greatly reduced by this air oxidation treatment. The calculated value of the area of the hysteresis loop in MH-2000 before the air oxidation treatment was 61, whereas the calculated value of the area of the hysteresis loop in MH-2000-Air560 subjected to the air oxidation treatment was 0.6. That is, the hysteresis loop substantially disappeared by the oxidation treatment, and the adsorption and desorption curves substantially matched with each other.

Acetylene black AB (manufactured by Denka Company Limited) and conductive grade #4500 (manufactured by TOKAI CARBON CO., LTD.) were prepared. These carbon materials have a developed dendritic structure, but have few intra-branch pores. The physical property values of these commercially available carbon materials for a catalyst carrier are shown in Table 2.

**[Table 1]**

| Carbon No. | Silver acetylide synthesis condition | | | Condition of first heat treatment | | Condition of second heat treatment | |
|---|---|---|---|---|---|---|---|
| | Silver nitrate concentration | Temperature of silver nitrate solution | Blowing flow rate | Molding pressure | Temperature rising rate | Temperature | Time |
| | mass% | °C | mL/min | kg/cm² | °C/min | °C | min |
| E1-1 | 0.1 | 25 | 4 | 1.2 | 15 | 1800 | 60 |
| E1-2 | 0.3 | 25 | 4 | 1.2 | 15 | 1800 | 60 |
| E1-3 | 0.5 | 25 | 4 | 1.2 | 15 | 1800 | 60 |
| E1-4 | 1 | 25 | 4 | 1.2 | 15 | 1800 | 60 |
| E1-5 | 1.5 | 25 | 4 | 1.2 | 15 | 1800 | 60 |
| E1-6 | 2 | 25 | 4 | 1.2 | 15 | 1800 | 60 |
| C1-1 | 5 | 25 | 4 | 1.2 | 15 | 1800 | 60 |
| C1-2 | 10 | 25 | 4 | 1.2 | 15 | 1800 | 60 |
| C2-1 | 0.3 | 10 | 4 | 1.2 | 15 | 1800 | 60 |
| E2-1 | 0.3 | 20 | 4 | 1.2 | 15 | 1800 | 60 |
| E2-2 | 0.3 | 30 | 4 | 1.2 | 15 | 1800 | 60 |
| E2-3 | 0.3 | 40 | 4 | 1.2 | 15 | 1800 | 60 |
| E2-4 | 0.3 | 50 | 4 | 1.2 | 15 | 1800 | 60 |
| E2-5 | 0.3 | 60 | 4 | 1.2 | 15 | 1800 | 60 |
| E3-1 | 0.3 | 50 | 1 | 1.2 | 15 | 1800 | 60 |
| E3-2 | 0.3 | 50 | 2 | 1.2 | 15 | 1800 | 60 |
| E3-3 | 0.3 | 50 | 5 | 1.2 | 15 | 1800 | 60 |
| E3-4 | 0.3 | 50 | 10 | 1.2 | 15 | 1800 | 60 |
| E3-5 | 0.3 | 50 | 15 | 1.2 | 15 | 1800 | 60 |
| C3-1 | 0.3 | 50 | 20 | 1.2 | 15 | 1800 | 60 |
| C3-2 | 0.3 | 50 | 30 | 1.2 | 15 | 1800 | 60 |
| C4-1 | 0.3 | 25 | 10 | None | 15 | 1800 | 60 |
| C4-2 | 0.3 | 25 | 10 | 0.2 | 15 | 1800 | 60 |
| C4-3 | 0.3 | 25 | 10 | 0.5 | 15 | 1800 | 60 |
| E4-1 | 0.3 | 25 | 10 | 0.8 | 15 | 1800 | 60 |
| E4-2 | 0.3 | 25 | 10 | 1.2 | 15 | 1800 | 60 |
| E4-3 | 0.3 | 50 | 1 | 2.5 | 15 | 1800 | 60 |
| E4-4 | 0.3 | 50 | 1 | 2.8 | 15 | 1800 | 60 |
| C5-1 | 0.4 | 50 | 2 | 2.2 | 0.5 | 1800 | 60 |
| E5-1 | 0.4 | 50 | 2 | 2.2 | 5 | 1800 | 60 |
| E5-2 | 0.4 | 50 | 2 | 2.2 | 10 | 1800 | 60 |
| E5-3 | 0.4 | 50 | 2 | 2.2 | 20 | 1800 | 60 |
| E5-4 | 0.4 | 50 | 2 | 2.2 | 50 | 1800 | 60 |
| E5-5 | 0.4 | 50 | 2 | 2.2 | 100 | 1800 | 60 |
| E5-6 | 0.4 | 50 | 2 | 2.2 | 200 | 1800 | 60 |
| C6-1 | 0.4 | 50 | 2 | 2.2 | 100 | 1000 | 60 |
| E6-1 | 0.4 | 50 | 2 | 2.2 | 100 | 1400 | 60 |
| E6-2 | 0.4 | 50 | 2 | 2.2 | 100 | 1600 | 60 |
| E6-3 | 0.4 | 50 | 2 | 2.2 | 100 | 2000 | 60 |
| E6-4 | 0.4 | 50 | 2 | 2.2 | 100 | 2100 | 60 |
| E6-5 | 0.4 | 50 | 2 | 2.2 | 100 | 2200 | 60 |
| E6-6 | 0.4 | 50 | 2 | 2.2 | 100 | 2300 | 50 |
| E6-7 | 0.4 | 50 | 2 | 2.2 | 100 | 2400 | 40 |
| E6-8 | 0.4 | 50 | 2 | 2.2 | 100 | 2500 | 30 |
| C6-2 | 0.4 | 50 | 2 | 2.2 | 100 | 2600 | 30 |

**[Table 2]**

| Carbon No. | Physical property value of carbon material | | | | | |
|---|---|---|---|---|---|---|
| | Number of hysteresis loops | (A) | (B) | (C) | (D) | (E) |
| | | BET specific surface area | ΔV_{0.87min} | ΔS_{0.4-0.87} | ΔV_{0.95-0.99} | ΔG |
| | | m²/g | mL/g | mL/g | mL/g | cm⁻¹ |
| E1-1 | 2 | 1320 | 13 | 31 | 810 | 64 |
| E1-2 | 2 | 1350 | 12 | 30 | 790 | 64 |
| E1-3 | 2 | 1330 | 13 | 32 | 780 | 64 |
| E1-4 | 2 | 1310 | 14 | 30 | 720 | 65 |
| E1-5 | 2 | 1320 | 12 | 31 | 650 | 65 |
| E1-6 | 2 | 1350 | 15 | 30 | 560 | 64 |
| C1-1 | 1 | 1340 | 26 | 32 | 490 | 65 |
| C1-2 | 1 | 1330 | 28 | 30 | 410 | 64 |
| C2-1 | 1 | 1310 | 24 | 51 | 420 | 64 |
| E2-1 | 2 | 1300 | 18 | 28 | 780 | 64 |
| E2-2 | 2 | 1300 | 14 | 31 | 790 | 64 |
| E2-3 | 2 | 1300 | 13 | 30 | 820 | 64 |
| E2-4 | 2 | 1330 | 12 | 30 | 850 | 65 |
| E2-5 | 2 | 1320 | 7 | 31 | 890 | 64 |
| E3-1 | 2 | 1360 | 8 | 25 | 1080 | 64 |
| E3-2 | 2 | 1300 | 7 | 28 | 980 | 65 |
| E3-3 | 2 | 1320 | 7 | 31 | 920 | 64 |
| E3-4 | 2 | 1350 | 8 | 31 | 830 | 65 |
| E3-5 | 2 | 1330 | 10 | 41 | 780 | 64 |
| C3-1 | 1 | 1330 | 24 | 51 | 560 | 64 |
| C3-2 | 1 | 1320 | 28 | 55 | 530 | 65 |
| C4-1 | 1 | 1200 | 32 | 33 | 480 | 61 |
| C4-2 | 1 | 1210 | 29 | 34 | 460 | 62 |
| C4-3 | 1 | 1310 | 27 | 32 | 420 | 63 |
| E4-1 | 2 | 1320 | 19 | 31 | 430 | 64 |
| E4-2 | 2 | 1390 | 15 | 21 | 420 | 66 |
| E4-3 | 2 | 1390 | 10 | 21 | 940 | 66 |
| E4-4 | 2 | 1380 | 7 | 19 | 1000 | 66 |
| C5-1 | 1 | 1380 | 26 | 52 | 690 | 71 |
| E5-1 | 2 | 1390 | 7 | 25 | 780 | 66 |
| E5-2 | 2 | 1390 | 8 | 22 | 830 | 65 |
| E5-3 | 2 | 1380 | 7 | 18 | 850 | 66 |
| E5-4 | 2 | 1390 | 7 | 16 | 890 | 66 |
| E5-5 | 2 | 1400 | 7 | 13 | 950 | 66 |
| E5-6 | 2 | 1400 | 7 | 11 | 970 | 67 |
| C6-1 | 1 | 1650 | 21 | 4 | 1010 | 71 |
| E6-1 | 2 | 1490 | 3 | 6 | 960 | 70 |
| E6-2 | 2 | 1480 | 5 | 8 | 970 | 69 |
| E6-3 | 2 | 1140 | 7 | 13 | 980 | 63 |
| E6-4 | 2 | 1030 | 16 | 15 | 920 | 60 |
| E6-5 | 2 | 990 | 17 | 21 | 620 | 57 |
| E6-6 | 2 | 710 | 15 | 25 | 730 | 52 |
| E6-7 | 2 | 655 | 16 | 27 | 690 | 49 |
| E6-8 | 2 | 590 | 18 | 32 | 545 | 46 |
| C6-2 | 1 | 380 | 31 | 53 | 490 | 42 |
| EC600JD | 1 | 1420 | 35 | 65 | 370 | 68 |
| EC600JD-1800 | 1 | 750 | 43 | 84 | 420 | 41 |
| CNovel-MH | 1 | 1460 | 32 | 75 | 95 | 76 |
| MH-2000 | 1 | 890 | 39 | 61 | 85 | 69 |
| MH-2000-Air560 | 1 | 1190 | 3 | 0.6 | 105 | 74 |
| AB | 1 | 63 | 2 | - | 380 | 64 |
| #4500 | 1 | 32 | 2 | - | 410 | 67 |

### <3. Preparation of MEA>

Membrane electrode composites (MEAs) were prepared using the carbon materials E1-1 to E6-8 and C1-1 to C6-2 for a catalyst carrier and the commercially available carbon materials for a catalyst carrier by the following steps.

### (3-1. Platinum Carrying Treatment)

The carbon material for a catalyst carrier was dispersed in distilled water to prepare a carbon material dispersion. Formaldehyde was then added to the carbon material dispersion, and the mixture was set in a water bath set at 40°C. The process was waited until the temperature of the carbon material dispersion reached 40°C, which was the same as that of the bath. Thereafter, an aqueous solution of dinitrodiamine Pt complex nitric acid was slowly poured into the carbon material dispersion while the carbon material dispersion was stirred. After stirring was continued for about 2 hours, the carbon material dispersion was filtrated, and the obtained solid was washed. The solid obtained in this way was vacuum-dried at 90°C and then pulverized in a mortar to obtain a pulverized solid. The pulverized solid was then heat-treated at 200°C for 1 hour in an argon atmosphere containing 5 vol% of hydrogen. Thereby, a carbon material supporting platinum was prepared.

The supported platinum amount of the carbon material supporting platinum was 40 mass% with respect to the total mass of the carbon material for a catalyst carrier and the platinum particles. The supported platinum amount was confirmed by inductively coupled plasma atomic emission spectrometry (ICP-AES).

### (3-2. Preparation of Coating Ink)

A Nafion solution in which Nafion (Nafion manufactured by DuPont Co., Ltd., registered trademark: Nafion, persulfonic acid-based ion exchange resin) as an electrolyte resin was dissolved was prepared. The carbon material supporting platinum (Pt catalyst) and the Nafion solution were then mixed in an argon atmosphere. The mass ratio of the solid content of the electrolyte resin was 1.0 time as much as the mass of the carbon material supporting platinum. However, in the case of using non-porous AB or #4500 as the carbon material for a catalyst carrier, the mass ratio of the solid content of the electrolyte resin was set to 0.5 times. The mixed solution was stirred lightly, and then the carbon material supporting platinum in the mixed solution was crushed with ultrasonic waves. Ethanol was further added to the mixed solution so that the total solid concentration of the carbon material supporting platinum and the electrolyte resin became 1.0 mass% with respect to the total mass of the mixed solution. Thereby, a coating ink containing the carbon material supporting platinum and the electrolyte resin was prepared.

### (3-3. Preparation of Catalyst Layer)

The coating ink was sprayed on a Teflon (registered trademark) sheet after adjustment of spraying conditions such that the mass of platinum per unit area of the catalyst layer (hereinafter, referred to as "platinum basis weight") became 0.2 mg/cm². A drying treatment was performed at 120°C for 60 minutes in an argon atmosphere to prepare a catalyst layer on the Teflon (registered trademark) sheet. Two identical catalyst layers were prepared, one as a cathode and the other as an anode.

### (3-4. Preparation of MEA)

A square electrolyte membrane of 6 cm on a side of was cut out from a Nafion membrane (NR 211 produced by DuPont Co., Ltd.). Each Teflon (registered trademark) sheet provided with each catalyst layer of an anode and a cathode was cut out with a cutter knife into a square of 2.5 cm on a side. The electrolyte membrane was inserted between the anode catalyst layer and the cathode catalyst layer on the sheet cut out as above and pressed to obtain a laminate. Specifically, the electrolyte membrane was inserted such that the catalyst layers sandwiched the central part of the electrolyte membrane and each catalyst layer and the electrolyte membrane were in contact with each other, and pressed without misalignment from each other to obtain a laminate. The pressing was performed at 120°C and 100 kg/cm² for 10 minutes. This laminate was then cooled down to room temperature. Only the Teflon (registered trademark) sheet was then peeled off carefully from each of the anode catalyst layer and the cathode catalyst layer. Through the above steps, the anode catalyst layer and the cathode catalyst layer were fixed to the electrolyte membrane.

Two square carbon paper sheets of 2.5 cm on a side were cut out from carbon paper (35BC manufactured by SGL Carbon Co., Ltd.) serving as the gas diffusion layer. These cut carbon paper sheets were laminated such that the anode catalyst layer and the cathode catalyst layer were placed without misalignment, thereby preparing a laminate. The laminate was then pressed at 120°C and 50 kg/cm² for 10 minutes to prepare an MEA. The mass of the catalyst layer fixed to the Nafion membrane was determined from a difference between the mass of the catalyst layer-attached Teflon (registered trademark) sheet before pressing and the mass of the peeled Teflon (registered trademark) sheet after pressing. The platinum basis weight, the basis weight of the carbon material for a catalyst carrier, and the basis weight of the electrolyte resin were calculated from the mass ratio of the composition of the catalyst layer. By this method, it was confirmed that the platinum basis weight was 0.2 mg/cm².

### <4. Performance Evaluation Test>

Each of the prepared MEAs was incorporated into a cell, and mounted on a fuel cell measurement apparatus to evaluate the performance of the fuel cell.

Air was supplied to the cathode and pure hydrogen was supplied to the anode under atmospheric pressure so that the respective utilization rates became 40% and 70%. The cell temperature was set to 80°C. Air and pure hydrogen supplied to the fuel cell were passed through distilled water kept at 65°C in a humidifier (that is, bubbling was performed) to humidify the fuel cell. That is, water vapor equivalent to reformed hydrogen was contained in these gases. The humidified gas was then supplied to the cell. Under such conditions, a gas was supplied to the cell, the load was then gradually increased, and an inter-terminal voltage of the cell at 200 mA/cm² and 1000 mA/cm² was recorded as the output voltage, and the performance evaluation of the fuel cell was performed.

The performance evaluation results of the fuel cell thus obtained were evaluated based on acceptable ranks A and B and rejected rank C according to the voltage of each current density. As for the acceptable rank, those having passed were regarded as "B", and those having higher performance were regarded as "A".

The criteria of the acceptable rank are as shown in the following rank classification method. The evaluation results are collectively shown in Table 3.

### [Rank Classification Method]

### -Output voltage at 200 mA/cm²-

A: The output voltage is 0.86 V or more.
B: The output voltage is 0.84 V or more and less than 0.86.
C: Inferior to B.

### -Output voltage at 1000 mA/cm²-

A: The output voltage is 0.65 V or more.
B: The output voltage is 0.60 V or more and less than 0.65.
C: Inferior to B.

**[Table 3]**

| Carbon No. | Fuel cell power generation output | |
|---|---|---|
| | Low current | Large current |
| | 200mA/cm² | 1000mA/cm² |
| E1-1 | B | B |
| E1-2 | B | B |
| E1-3 | B | B |
| E1-4 | B | B |
| E1-5 | B | B |
| E1-6 | B | B |
| C1-1 | B | C |
| C1-2 | B | C |
| C2-1 | C | C |
| E2-1 | B | B |
| E2-2 | B | B |
| E2-3 | B | B |
| E2-4 | B | B |
| E2-5 | A | A |
| E3-1 | A | A |
| E3-2 | B | B |
| E3-3 | B | B |
| E3-4 | B | B |
| E3-5 | B | B |
| C3-1 | C | C |
| C3-2 | C | C |
| C4-1 | C | C |
| C4-2 | C | C |
| C4-3 | C | C |
| E4-1 | B | B |
| E4-2 | B | B |
| E4-3 | A | A |
| E4-4 | A | A |
| C5-1 | C | C |
| E5-1 | B | B |
| E5-2 | B | B |
| E5-3 | B | B |
| E5-4 | B | B |
| E5-5 | A | A |
| E5-6 | A | A |
| C6-1 | C | C |
| E6-1 | B | B |
| E6-2 | A | A |
| E6-3 | A | A |
| E6-4 | A | A |
| E6-5 | B | B |
| E6-6 | B | B |
| E6-7 | B | B |
| E6-8 | B | B |
| C6-2 | C | C |
| EC600JD | C | C |
| EC600JD-1800 | C | C |
| CNovel-MH | C | C |
| MH-2000 | C | C |
| MH-2000-Air560 | C | C |
| AB | C | C |
| #4500 | C | C |

### <5. Evaluation>

All of the carbon materials for a catalyst carrier that satisfy the requirements of the present disclosure have high output voltages at a low current (200 mA/cm²) and at the time of a large current (1000 mA/cm²). Therefore, the overvoltage was reduced. In particular, in the carbon materials E2-5, E3-1, E4-3, E4-4, E5-5, E5-6, and E6-2 to E6-4 for a catalyst carrier, the overvoltage at the time of a large current was particularly low. These carbon materials for a catalyst carrier are prepared so that any one of the temperature of the silver nitrate solution, the molding pressure, the temperature rising rate during the first heat treatment, and the heating temperature during the second heat treatment satisfies particularly preferable conditions. The carbon materials E4-1 and E4-2 for a catalyst carrier did not satisfy the requirement (D), but the results were good. Of course, particularly good results are obtained when all of the requirements (A) to (E) are satisfied.

On the other hand, in the carbon materials C1-1, C1-2, C2-1, C3-1, C3-2, C4-1 to C4-3, C5-1, C6-1, and C6-2 for a catalyst carrier, the nitrogen adsorption/desorption isotherm did not exhibit two hysteresis loops. For this reason, the overvoltage at the time of a large current increased. In the commercially available carbon materials for a catalyst carrier, the nitrogen adsorption/desorption isotherm did not exhibit two hysteresis loops. The overvoltage increased not only at the time of a large current but also at the time of a low current.

Reference numerals given to the respective drawings are as follows.
100 Polymer electrolyte fuel cell
110, 120Separator
130, 140 Gas diffusion layer
150, 160 Catalyst layer
170 Electrolyte membrane

The entire contents of the disclosures by Japanese Patent Application No. 2020-175410 are incorporated herein by reference.

All the literature, patent application, and technical standards cited herein are also herein incorporated to the same extent as provided for specifically and severally with respect to an individual literature, patent application, and technical standard to the effect that the same should be so incorporated by reference.

## Claims

1. A carbon material for a catalyst carrier of a polymer electrolyte fuel cell, wherein a nitrogen adsorption/desorption isotherm exhibits two hysteresis loops comprising a first hysteresis loop and a second hysteresis loop in a range in which a relative pressure P/P₀ is 0.4 or more.

2. The carbon material for a catalyst carrier of a polymer electrolyte fuel cell according to claim 1, wherein the two hysteresis loops exhibited by the nitrogen adsorption/desorption isotherm comprise a first hysteresis loop within a range in which the relative pressure P/P₀ is 0.87 or more and a second hysteresis loop within a range in which the relative pressure P/P₀ is from 0.4 to 0.87.

3. The carbon material for a catalyst carrier of a polymer electrolyte fuel cell according to claim 2, wherein the carbon material satisfies the following requirements (A), (B), and (C):
(A) a specific surface area determined by BET analysis of a nitrogen adsorption isotherm is from 450 m²/g to 1500 m²/g,
(B) in the first hysteresis loop, a minimum value ΔV_{0.87min} of an adsorption amount difference ΔV_{0.87} is 20 mL/g or less within a range in which the relative pressure P/P₀ is 0.87 ± 0.03, and
(C) an area ΔS_{0.4-0.87} of the second hysteresis loop is from 5 mL/g to 50 mL/g.

4. The carbon material for a catalyst carrier of a polymer electrolyte fuel cell according to claim 3, wherein the carbon material further satisfies the following requirement (D):
(D) in the nitrogen adsorption isotherm, an adsorption amount difference ΔV_{0.95-0.99} between an adsorption amount at a relative pressure P/P₀ of 0.99 and an adsorption amount at a relative pressure P/P₀ of 0.95 is from 500 mL/g to 1100 mL/g.

5. The carbon material for a catalyst carrier of a polymer electrolyte fuel cell according to claim 3 or 4, wherein the carbon material further satisfies the following requirement (E):
(E) in a Raman spectrum obtained by Raman spectrometry, a half-value width of a G-band detected in a range of 1500 cm⁻¹ to 1700 cm⁻¹ is from 45 cm⁻¹ to 70 cm⁻¹.

6. A catalyst layer for a polymer electrolyte fuel cell, the catalyst layer comprising the carbon material for a catalyst carrier of a polymer electrolyte fuel cell according to any one of claims 1 to 5.

7. A fuel cell, comprising the catalyst layer for a polymer electrolyte fuel cell according to claim 6.

8. The fuel cell according to claim 7, wherein the catalyst layer for a polymer electrolyte fuel cell is a catalyst layer on a cathode side.
